# EUROPEAN PATENT APPLICATION

(11) **EP 4 750 051 A1**
(43) Date of publication of application: **27.05.2026**
(21) Application number: 24214538.1
(22) Date of filing: 21.11.2024
(51) Int. Cl.: H04N 19/00, G06N 3/045, G06T 9/00

(54) **COMPUTER-IMPLEMENTED METHOD FOR TRAINING AN IMAGE COMPRESSION NETWORK**

(71) Applicant: Koninklijke Philips N.V., 5656 AE Eindhoven (NL)
(72) Inventor: CAROLUS, Heike, Eindhoven (NL); BROSCH, Tom, Eindhoven (NL); GESSERT, Nils Thorben, 5656AG Eindhoven (NL); KROENKE-HILLE, Sven, Eindhoven (NL); SCHMIDT-RICHBERG, Alexander, Eindhoven (NL)
(74) Representative: Philips Intellectual Property & Standards

(57) **Abstract**

The present disclosure provides a computer-implemented method for training an image compression network, the method comprising providing an image compression network comprising an encoding component and a decoding component; providing an image processing component; processing an initial image by the encoding component to obtain a compressed image; processing the compressed image by the decoding component to obtain a decompressed image; processing the decompressed image by the image processing component to obtain an image processing result for the decompressed image; generating a loss function evaluating an image processing loss, the image processing loss based on a comparison between the image processing result for the decompressed image and an image processing ground truth result; and using the loss function for training the image compression network.

## Description

### FIELD OF THE INVENTION

The invention provides a computer-implemented method for training an image compression network, a method of using the trained image compression network, an image compression network, a system, a computer program product, and a computer-readable medium.

### BACKGROUND OF THE INVENTION

Presently, for medical applications, the rate of image compression is limited by the quality of the decompressed image. Lossy image compression may achieve higher compression rates and smaller image sizes, but important details in the image might get lost in the process, which is particularly problematic for medical applications. Lossless compression techniques are therefore usually used.

Yet, especially for medical images, a high compression rate is desirable due to the large size of the images, e.g. a 3D whole-body scan. The large size is detrimental for different reasons, for example, due to high bandwidth requirements when transferring the data to the cloud, which may be required for cloud-based image processing of the transferred images.

An object underlying the subject-matter of the present application is to allow for addressing at least some of the above challenges, in particular, to provide a method that allows for providing compression that maintains sufficient image quality while also allowing for size reduction.

### SUMMARY OF THE INVENTION

The invention provides a computer-implemented method for training an image compression network, a method of using the trained image compression network, an image compression network, a system, a computer program product, and a computer-readable medium according to the independent claims. Preferred embodiments are laid down in the dependent claims.

The present disclosure provides computer-implemented method for training an image compression network. The method comprises:
providing an image compression network comprising an encoding component and a decoding component;
providing an image processing component;
processing an initial image by the encoding component to obtain a compressed image;
processing the compressed image by the decoding component to obtain a decompressed image;
processing the decompressed image by the image processing component to obtain an image processing result for the decompressed image;
generating a loss function evaluating an image processing loss, the image processing loss based on a comparison between the image processing result for the decompressed image and an image processing ground truth result; and
using the loss function for training the image compression network.

Medical images often contain information that is not relevant for any purpose achieved by image processing, e.g., the air surrounding the patient or the table (this can amount to ~25% of the voxels). But also certain organs (e.g., the heart for a lung cancer assessment), or parts of the organ (e.g., the interior part of an organ for a segmentation algorithm where mainly the rim of the organ is of interest) might not be relevant.

The present disclosure proposes to train a neural network for image compression and decompression that can be targeted at and closely coupled to a specific image processing application/algorithm. This allows for a strong (lossy) compression of the image while not deteriorating the results of the image processing application.

In other words, present disclosure allows for providing compression that achieves high compression of the image, particularly without losing any information relevant for the image processing application.

This allows for improved usage of available bandwidth, e.g. for data transmission for cloud computing, by transmitting images compressed in accordance with the present disclosure. Accordingly, as an example, it can be avoided that the data transmission becomes a bottleneck in cloud-based processing. Thus, the disclosure also allows for compressing and decompressing image data to overcome bandwidth challenges of sharing large image data sets, particularly without detrimental effects to the image processing after decompression or hampering processing times.

It will thus be understood that the method of the present disclosure addresses at least some of the above challenges, among others.

An image compression network, according to the present disclosure, may comprise a machine learning network for compressing and decompressing images input into the network. Known network architectures suitable for compressing and decompressing images may be employed. These may comprise, but are not limited to convolutional neural networks (CNNs), diffusion models, generative adversarial networks, variational autoencoders, and multilayer perceptrons, for example.

Training the image compression network, according to the present disclosure, may comprise known training techniques making use of a loss function. The loss function may quantify the error margin between a model's prediction and an actual target value. Any suitable type of loss function may be employed, examples of which will be provided below.

According to the present disclosure, using the loss function for training the image compression network may entail employing the loss function in adjusting the network's parameters. In particular, the parameters may be adjusted to minimize the loss represented by the loss function. Depending on the definition of the loss function, the network may be trained towards specific outcomes, such as compression rate, image quality for further image processing, or the like.

In the present case, the loss function that is generated and used for training is a loss function evaluating an image processing loss. In other words, the loss function may be seen as being defined to train the network at least towards the outcome that the decompressed images have high quality in terms of subsequent image processing, and potentially towards other outcomes, such as compression rate. As will be seen further below, other losses may be taken into account in the loss function or in an additional loss function.

An encoding component of the image compression network, according to the present disclosure, may be seen as a portion of the image compression network that is configured to encode, particularly compress, images input into the image compression network. For example, in the deployment phase of the trained image compression network, the encoding portion may be run at the site where images, such as medical images, are acquired, and the images may be compressed by the encoding portion. In the deployment phase of the trained image compression network, the compressed image may be stored and/or transmitted via a data connection to other devices, such as to a cloud device and/or a local device at a different location. The image may then be decompressed and optionally undergo image processing by the image processing component and/or another image processing component.

A decoding component, according to the present disclosure, may be seen as a portion of the image compression network that is configured to decode, particularly decompress, images input into the image compression network. In the deployment phase of the trained image compression network, the compressed image may be retrieved from storage and/or received via a data connection from other devices, such as a cloud device and/or a local device, e.g. a local device where the image was acquired. The retrieved or received compressed image may then be decompressed by the decoding component. The decompressed image may then undergo image processing, e.g. by the image processing component and/or another image processing component.

It is noted that the method may be carried out for one or more image processing components. In case image processing comprises a plurality of image processing tasks, the tasks may be implemented by different image processing algorithms, which in turn, may be comprised in different image processing components. The plurality of tasks may, for example, comprise segmentation and classification, which may be implemented by different image processing algorithms comprised in different image processing components. Alternatively or in addition, a plurality of image processing tasks may be comprised in a single image processing component.

For the purpose of training, the above-described storage and/or transmission of a compressed image between devices may not be carried out. For example, during training, an image may be compressed and decompressed at the same device. In particular, the entire training may optionally be carried out at the same device.

Processing an initial image by the encoding component to obtain a compressed image may comprise the encoding component receiving the initial image as input, encoding, particularly compressing, the initial image, and outputting the compressed image resulting from encoding, particularly compressing, the initial image.

Processing the compressed image by the decoding component to obtain a decompressed image may comprise the decoding component receiving the compressed image as input, decoding, particularly decompressing, the compressed image, and outputting the decompressed image resulting from decoding, particularly decompressing, the compressed image.

Processing the decompressed image by the image processing component to obtain an image processing result for the decompressed image may comprise the image processing component receiving the decompressed image as input, carrying out one or more image processing functions on the decompressed image, and outputting the result of the image processing function(s) as the image processing result for the decompressed image.

An image processing component, according to the present disclosure, may be configured to carry out known types of image processing methods, particularly image analysis methods, such as but not limited to methods for identifying a region of interest, image cropping, image classification, labeling, segmentation, registration, object detection or the like. The image processing component may optionally employ machine learning-based image processing. This may be referred to as machine learning-based image processing component.

According to the present disclosure, the image processing result may comprise, particularly be, an image, e.g. a processed image, e.g. a processed initial image or processed decompressed image. Alternatively or in addition the image processing result may comprise non-image data types, e.g., just one value in case of a classification, a binary mask in case of a segmentation, which could also be cropped to the segmented structure, among others.

As explained above, the image processing loss used by the method of the present disclosure is based on a comparison between the image processing result for the decompressed image and an image processing ground truth result. The image processing ground truth result may, for example, be seen as a target result that would ideally be achieved when carrying out image processing on the decompressed image. Accordingly, the comparison may be seen as a comparison between an actual image processing result and a target image processing result. When minimizing the image processing loss, e.g. during training of the image compression network, a difference between an image processing result for the decompressed image and the image processing ground truth result may be minimized, or, in other words, a difference between an actual and a target result of the image processing may be minimized.

Depending on the case at hand, there are different possibilities for providing the image processing ground truth result. This will be described below in different examples.

As will be understood from the discussion further below, in addition to the image processing loss, a compression loss may also be taken into account. The compression loss may be based on a comparison between the initial image input into the image compression network and the corresponding output of the image compression network, i.e., the result of compressing and decompressing the initial image by means of the image compression network. Common examples for loss functions used in image compression networks are mean squared error or a perceptual loss to evaluate image quality more effectively.

As can be seen from the above, there is a tight relationship between the image processing that is intended to be used on the images output by the image compression network and the training of the image compression network. This yields much better results than an isolated training. The isolated training will be carried out using different, particularly more general, quality metrics for what constitutes a good output towards which the network is trained. As such, the trained network will yield results that may be generally considered high quality (e.g., being better for rendering to a user), yet would not necessarily be the best conceivable quality for specific subsequent processing. At the same time, compression rate may not be as high as possible if aiming at different, particularly more general, quality metrics.

According to the present disclosure, the method may comprise inputting the initial image into the image processing component and processing the initial image by means of the image processing method to obtain an image processing result for the initial image, wherein the image processing ground truth result is based on, in particular comprises, the image processing result for the initial image.

As explained above, the image processing ground truth result may be obtained in different ways. Using the image processing result for the initial image as ground truth result may allow for obtaining the ground truth in an uncomplicated way and yields very precise results, e.g. for a specific image processing component to be used later during use of the trained image compression network.

Using the image processing result for the initial image as ground truth result is particularly suitable where the image processing component is known and/or not expected to undergo changes in the course of training the image compression network, such as when the image processing component does not need to undergo training or is already trained. A later to be used image processing component may, for example, be used as the image processing component used for providing the ground truth.

According to the present disclosure, the image processing component may be a machine learning-based component and the method may comprise joint training of the image compression network and the image processing component.

Where an image processing component is machine learning-based, the image processing component will require training at some point. This could be done prior to training the image compression network. The present disclosure suggests that the training of the image processing component and the training of the image compression network may be carried out jointly. This further strengthens the relationship between the image compression network and the image processing component. This may yield even better results, both for the compression function and for the image processing function.

Moreover, the image processing network becomes robust against image artifacts introduced by the compression network which yields an even higher acceptable compression of the input image.

According to the present disclosure, the image processing component and the image compression network may be trained on the same ground truth, particularly when carrying out joint training of the image compression network and the image processing component.

Using the same ground truth will yield trained image processing component and image compression network that are closely interrelated and can yield even better results when using the trained image processing component and image compression network together than if they were trained on different ground truths.

According to the present disclosure, the ground truth may be provided by a reference data source, such as from a reference image processing component and/or user input and/or a reference database.

These examples may, in particular, be employed when carrying out joint training of the image compression network and the image processing component. In particular, use of such ground truths may be helpful in the case of joint training based on the same ground truth.

However, the examples may also be helpful for the case where the image compression network is trained independently. For example, in cases where computing power is a concern during training, it may be preferable to refer to a database or to user input rather than an output of the image processing component. As another example, in cases where access to the image processing component may be limited, use of a reference image processing component or user input or a reference database may be preferable compared to using the image processing component for providing ground truth.

According to the present disclosure, the loss function may be configured to score the quality of the image processing results of processing the decompressed image relative to the ground truth.

As will be apparent also from the introductory discussions above, such a loss function provides the close link between image processing and image compression. Such a loss function allows for training the image compression network, particularly adjusting its parameters, towards outputting a decompressed image that is expected to yield good image processing results for an expected use case, e.g. an expected image processing application.

According to the present disclosure, the image processing loss may comprise at least one of a Dice, cross-entropy or focal loss for a segmentation algorithm, a cross-entropy or mean squared error loss for a classification task, cross-entropy or IoU (intersection over union) loss for an object detection task, mean squared error, mutual information or total variation loss for a registration task.

According to the present disclosure, the image processing component may comprise a medical image processing component. Optionally the image processing component may be a ML-based component.

For example, the medical image processing components may be configured for image analysis methods of medical images. In particular, the medical image processing components may be configured image segmentation, object detection, registration, classification, and/or labeling of medical images, e.g. classification of an image and/or anatomy depicted by the image, identifying a region of interest, image cropping. Such an image processing component may be considered to be a specialized software. In some cases, the use of the specialized software may be advantageous, as it is already optimized for a given purpose.

In other cases, such as the one described below, a more general-purpose image processing component may be used, rather than a specialized software. The general-purpose image processing component may be a visual foundation model.

According to the present disclosure, the image processing component may comprise a visual foundation model, particularly a self-supervised trained visual foundation model, the visual foundation model being trained to identify relevant parts of an image. The image processing loss may in this case be based on a determination whether the image processing result for the decompressed image maintains parts of the initial image identified as relevant by the visual foundation model.

Making use of such a model allows for later use of the trained image compression network with different image processing components, e.g. of a similar type.

According to the present disclosure, the image processing component may comprise the visual foundation model and the loss function, particularly the image processing loss, may be based on a mean-squared error and/or a cross-entropy loss and/or a contrastive loss function comparing the predictions of the visual foundation model given the initial image as input and given the decompressed image as input, respectively.

According to the present disclosure, the loss function may be an image processing loss function. The method may comprise, using a compression loss function together with the image processing loss function for training the image compression network. Alternatively or in addition, the loss function may evaluate, in addition to the image processing loss, a compression loss.

That is a single loss function representing the image processing loss and the image compression loss may be used. Alternatively, separate loss functions, one of the loss functions representing the image compression loss and another one of the loss functions representing the image processing loss, may be used. In both cases, during training of the image compression network, the network is trained towards both, low image processing loss and low compression loss.

According to the present disclosure, the image processing component may be configured to carry out at least one of cropping an image, particularly a medical image, to a specific region of interest, classification of an image or parts thereof, particularly a medical image or parts thereof, segmentation of an image or parts thereof, registration of images or object detection.

The present disclosure also provides a method of using the trained image compression network, obtained by means of the method according to the present disclosure, particularly as described above, for compressing images, in particular prior to decompressing (by means of the trained image compression network), and processing an image by means of the image processing component and/or another image processing component. The present disclosure, in particular, may provide a method of using the trained image compression network, obtained by means of the method according to the present disclosure, particularly as described above, for compressing images prior to transmitting and subsequently decompressing and processing an image by means of the image processing component or another image processing component.

That is, after training, the trained image compression network may be used for compressing images, particularly medical images, such as X-ray images, MRI images, CT images, ultrasound images, or the like.

After compressing an image, the compressed image may optionally be stored and/or transmitted, e.g. via a data connection, to another device, such as a cloud computing device and/or a device at a different site. Using the trained image compression network, the compressed image may be decompressed, e.g. at the other device.

After compressing and decompressing the image, e.g. medical image, by means of the trained image compression network, the decompressed image, may be processed by the image processing component used in the training. Alternatively or in addition, the decompressed image may be processed by another (different) image processing component than the one used in the training. For example, if a general image processing component like a visual foundation model is used during training, a different, e.g. more specialized, image processing component may be used after training, i.e. during the deployment phase of the trained image compression model.

The image may be compressed at a first processing device and the compressed image may be transferred to a second processing device and decompressed at the second processing device. Image processing may be carried out at the second processing device. The image processing results may then, for example, be transferred to the first processing device and/or to storage. The image processing result may be transferred without being compressed or after being compressed with a suitable compression algorithm. Many image processing results are smaller in size than the images, and, accordingly, do not necessarily require compression.

In the present disclosure, the terms transferring data and transmitting data, e.g. images, are used interchangeably.

It will be understood that the method of the present disclosure allows for images being compressed and decompressed in such a manner that they require lower resources for transmission and storage while also allowing for high quality decompressed images, and particularly high-quality results of image processing the decompressed images.

The present disclosure also provides a system comprising one or more processing devices configured to carry out the method according to the present disclosure, particularly as described above.

The present disclosure also provides a computer program product comprising instructions which, when the program is executed by a computing system, cause the computing system to carry out the method according to the present disclosure, particularly as described above.

The present disclosure also provides a computer readable medium having stored thereon instructions which, when executed by a computing system, cause the computing system to carry out the method according to the present disclosure, particularly as described above.

The present disclosure also provides an image compression network trained by any of the methods of the present disclosure, particularly as described above. In particular, a computer program product and/or computer readable medium comprising instructions, which when executed by a computing system, cause the computing system to process input data received by the computing system by means of the image compression network.

The features and advantages outlined above in the context of the method similarly apply to the use, the system, the computer program product, and the computer-readable medium of the present disclosure.

### BRIEF DESCRIPTION OF THE DRAWINGS

Fig. 1 schematically illustrates a method according to the present disclosure.
Fig. 2 schematically illustrates a system according to the present disclosure.
Fig.3 schematically illustrates an exemplary training architecture according to the present disclosure.

### DETAILED DESCRIPTION OF EMBODIMENTS

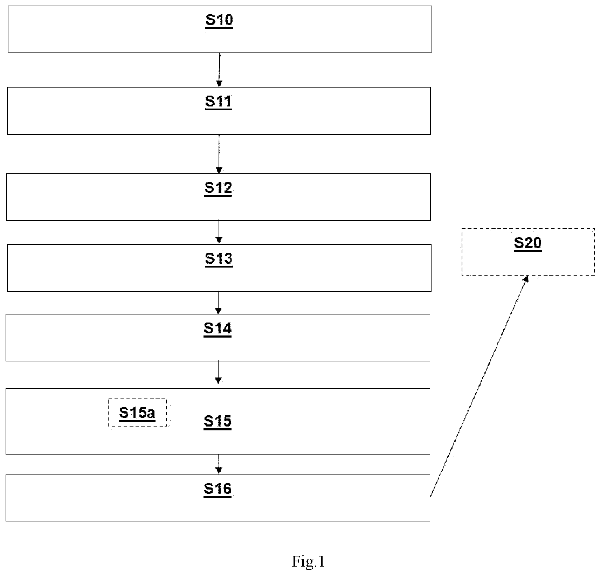

Fig. 1 schematically illustrates a computer-implemented method for training an image compression network according to the present disclosure.

The method comprises, in step S10, providing an image compression network comprising an encoding component and a decoding component.

The image compression network may comprise a machine learning network trained to compress and decompress images input into the network. Examples for a network architecture of the image compression network comprise convolutional neural networks (CNNs), diffusion models, generative adversarial networks, and multilayer perceptrons, for example.

The method comprises, in step S11, providing an image processing component, such as a component that processes medical images. Examples for such components include components for segmentation, object detection, image registration, classification, labeling, or the like.

The image processing component may, in some examples, be a machine learning-based component. If the image processing component is a machine-learning based component, in one example the image processing component may be trained jointly with the image compression network, particularly trained on the same ground truth. Such ground truth may be provided by a reference data source. For example, ground truth data may comprise data retrieved from a reference database or received via a user input in some examples.

The method comprises, in step S12, processing an initial image by the encoding component to obtain a compressed image.

The method comprises, in step S13, processing the compressed image by the decoding component to obtain a decompressed image.

The method comprises, in step S14, processing the decompressed image by the image processing component to obtain an image processing result for the decompressed image.

The nature/type of the image processing result depends on the image processing component. The image processing result may, for example, yield image data, labeled image data, text and/or numerical data, among others, e.g. just one value in case of a classification or a binary mask in case of a segmentation, which could also be cropped to the segmented structure.

The method comprises, in step S15, generating a loss function evaluating an image processing loss, the image processing loss based on a comparison between the image processing result for the decompressed image and an image processing ground truth result.

The loss function may be configured to score the quality of the image processing results of processing the decompressed image relative to the ground truth, in particular to minimize the image processing loss.

The loss function may be an image processing loss function and may be used together with an additional compression loss function for training the image compression network. Alternatively, a single loss function may evaluate image processing loss and compression loss.

As mentioned above, the image processing ground truth result may be provided by a reference data source. For example, ground truth data may comprise data retrieved from a reference database or received via a user input in some examples.

In other examples, the ground truth may be obtained by processing the initial image by means of the image processing component. Specifically, the method may comprise the optional step S15a of inputting the initial image into the image processing component and processing the initial image by means of the image processing component to obtain an image processing result for the initial image. In this example, the image processing ground truth result is based on, in particular comprises, the image processing result for the initial image.

In an example, the image processing component comprises a visual foundation model, particularly a self-supervised trained visual foundation model, the visual foundation model being trained to identify relevant parts of an image. In this example, the image processing loss is based on a determination whether the image processing result for the decompressed image maintains parts of the initial image identified as relevant by the visual foundation model. In this example, the loss function, particularly the image processing loss, may be based on a mean-squared error and/or a cross-entropy loss and/or a contrastive loss function comparing the predictions of the visual foundation model given the initial image as input and given the decompressed image as input, respectively.

The method comprises, in step S16, using the loss function for training the image compression network. As mentioned above, in some examples, the training of the image compression network may be carried out jointly with training the image processing component.

The trained image compression network may be used (as implied by separate step S20), for compressing images. In particular, the images may be compressed and decompressed prior to processing an image by means of the image processing component that was used during the training, particularly when joint training was carried out or for a specialized image processing component used during training, or another image processing component. For example, where the visual foundation model was used for training, another, for example more specialized, image processing component may later be used. The compressed images may be stored and/or transmitted via a data connection prior to being decompressed.

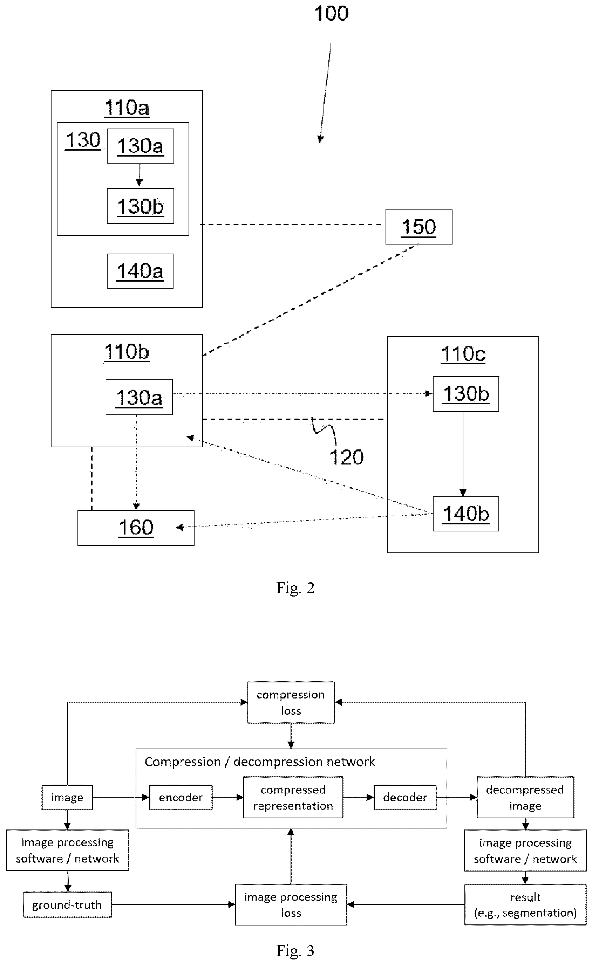

Fig. 2 schematically illustrates a system 100 comprising one or more processing devices 110a, 110b, 100c configured to carry out the method according to the present disclosure, for example the method described above in the context of Fig. 1. In particular, the system may be configured to carry out the training of the image compression network and/or configured for use of the trained image compression network according to the present disclosure. At least some of the processing devices may be connected by a data connection 120. Image compression network 130, comprising an encoding component 130a and a decoding component 130b, is shown schematically. Moreover, image processing components 140a and 140b are shown schematically. In the present case, image processing components 140a and 140b may be the same. They may also be different, e.g. in case the image processing component used for training differs from the one used during the deployment phase of the image compression network, as explained above in the context of the visual foundation model.

For the sake of illustration, encoder and decoder components are shown at processing device 110a. This serves to illustrate that for the purpose of training, compression and decompression may be carried out at the same processing device. This is optional and alternatively different processing devices may be used. Moreover, image processing component 140a is shown at processing device 110a serving to show that, particularly during training, optionally the image processing component may also be run at the same device as the image compression network. However, this is optional.

Further, for the sake of illustration of a use scenario of the trained image compression network, the encoding component 130a is shown at the processing device 110b and the decoding component at the processing device 110c to illustrate, that the image may be at processing device 110b and the compressed image may be provided, e.g. transmitted via the data connection, to processing device 110c and decompressed at processing device 110c. Moreover, image processing component 140b is shown at processing device 110c to illustrate that the decompressed image may further be processed at the same processing device where it was decompressed. This is optional and processing may be carried out by yet another device.

For the sake of illustration, arrows indicate that the compressed image data may be transferred from the encoder component on processing device 110b to the decoder component at processing device 110c, where data is decompressed and processed, and the image processing results may be transferred to memory and/or back to the processing device 110b where the image data had been encoded.

It is noted that, for the purpose of carrying out the method of training of the image compression network, a single processing device, such as processing device 110a, may be sufficient and additional processing devices and data connections are optional.

When using the trained image compression network, one or more of the processing devices involved in using the trained image compression network may be part of or external to the system 100.

Fig. 2 also shows an optional user interface 150, e.g. for receiving user input and/or outputting information to a user, and an optional data storage 160, for example for storing image data prior to or after compression and/or for storing the image processing results.

The present disclosure also provides a computer program product comprising instructions which, when the program is executed by a computing system, cause the computing system to carry out the method according to the present disclosure, for example the method described above in the context of Fig. 1.

The present disclosure also provides a computer readable medium having stored thereon instructions which, when the program is executed by a computing system, cause the computing system to carry out the method according to the present disclosure, for example the method described above in the context of Fig. 1.

The present disclosure also provides an image compression network trained by any of the methods of the present disclosure, particularly as described in the context of Fig. 1. In particular, a computer program product and/or computer readable medium comprising instructions, which when executed by a computing system, cause the computing system to process input data received by the computing system by means of the image compression network.

Further context, features, examples, and advantages of the present disclosure will become apparent from the following discussion.

The resolution and amount of medical image data is increasing more and more while also image processing algorithms are becoming more complex. This results in higher computational requirements on site. Cloud computing can solve the issue of missing computational capacities. At the same time this results in a lot of data traffic when images are transferred from the site to the cloud. Instead of computational resources, bandwidth now becomes an issue and might hamper the speed at which results of image processing software are available. To lower the amount of data to be transferred, images should be compressed before transfer.

More specifically, many image processing algorithms nowadays are based on neural networks. These optimally require powerful GPUs for fast inference. To enable this, applications are moving from on-site to cloud computing where more and stronger computing capacities are available; thereby bypassing the need to buy expensive equipment for each site.

This, however, introduces a lot of data traffic such that the speed at which processing results are available might be limited by the bandwidth of the transfer; this becomes even more severe with increasing image sizes, e.g., stemming from new technologies like the PhotonCounting scanner where one thorax scan can have a size of more than 3 GB.

To increase speed and lower cost, it is desirable to compress images as much as possible for data transfer. Here lossy compression would be of high interest. Current research addresses the issue of optimal data compression by injecting additional information into training, e.g., by using semantic importance maps to obtain decompressed images which still have good visual quality for the human eye. Such semantic importance maps may be used for defining what would be important to keep in the image to counteract negative impact of lossy compression. However, the technique requires additional information during training, and availability thereof might be limited. Moreover, use of semantic importance maps is still of lossy nature and important details in an image might get lost in the process, particularly where availability and/or quality of semantic importance maps cannot be guaranteed.

In the present disclosure, training of an image compression network, e.g. a neural network for image compression and decompression, is provided that is targeted at and closely coupled to a specific image processing application (e.g. algorithm). Therewith, a strong, lossy compression of the image can be achieved while not deteriorating the results of the image processing software.

In other words, the present disclosure relates, among others, to compressing and decompressing image data to overcome bandwidth challenges of sharing large image data sets. For example, when advanced visualization applications are going to be in the cloud, transferring images to and from the cloud requires bandwidth. To increase speed and lower cost, it would be desirable to compress images as much as possible for data transfer. Lossy compression has good compression rates, however, in general also has the risk that important details in the image might get lost in the process.

The present disclosure addresses the need for a compression algorithm that has an improved compression rate, particularly achieves the highest possible compression of the image, while not losing information relevant for the image processing algorithm.

The present disclosure allows for providing a method for compressing medical image data for a specific image processing task. The method may comprise receiving a medical input image to be compressed; receiving a specific image processing task to be processed by an imaging processing algorithm on the medical input image; providing a compression network that is trained to compress medical image data, wherein in the training step use is made of a loss function, wherein the loss function evaluates the quality of an imaging processing algorithm on a decompressed image by comparing it to a result on the input image; inputting the input image and the specific image processing task into the compression network thereby obtaining a compressed output image.

The present disclosure leverages the fact that medical images often contain information that is not relevant, e.g., the air surrounding the patient or the table (this can amount to ~25% of the voxels). But also, certain organs (e.g., the heart for a lung cancer assessment), or parts of the organ (e.g., the interior part of an organ for a segmentation algorithm where mainly the rim of the organ is of interest) might not be relevant.

The present disclosure allows providing a compression algorithm that achieves the highest possible compression of the image while not losing any information relevant for the image processing algorithm.

Optionally, the compression network can be tuned for optimal speed on a CPU, e.g. using OpenVino, such that no expensive computational resources are required on-site.

In production, i.e. after training the image compression network, the encoder part of the compression network could be inferred on site, the compressed representation may be sent to the cloud, where the decoder part of the compression network may run to create the decompressed image. The image processing software may then run on the decompressed image. The result may be sent back to the site or elsewhere, depending on the use case at hand. In many cases, the result of an image processing component/software is much smaller than the original image (e.g., just one value in case of a classification, a binary mask in case of a segmentation, which could also be cropped to the segmented structure). Accordingly, bandwidth may not be a relevant factor for transferring the image processing result. Nevertheless, results could be compressed with standard algorithms for faster transfers.

As will be understood from the above explanations, the present disclosure may provide the targeted training of a compression network for a specific image processing task. Rather than additional information as a further input channel, a loss function may be used, which evaluates the quality of the image processing algorithm on the decompressed image, for example by comparing it to the result on the original image. This allows for obtaining a compression network with a very strong, lossy compression of the image which however does not deteriorate the result of the image processing software.

In another example, instead of using an available image processing software, one could also jointly train the compression network together with an image processing network. In this case, the image processing network would become robust against image artifacts introduced by the compression network. This may potentially yield an even higher acceptable compression of the image.

An example of the method of the present disclosure is provided below making reference to Fig. 3.

The following elements may be employed in this example:
- a medical image (e.g., CT, MR, US, X-ray, or the like)
- an image processing software
- the result of the image processing software on the medical image as ground truth (in other examples, other types of ground truth may be employed)
- a network architecture for compression and decompression of image data and a (first) loss function suitable for compression to train this network
- a (second) loss function capable of scoring the quality of the image processing result compared to the ground truth (e.g., the Dice loss for a segmentation algorithm, cross-entropy loss for a classification task, ...)

Alternatively, rather than having a first and second loss function, a single combined loss function may be employed to represent the compression loss and the image processing loss.

When training the compression network, the image processing software in this example is run on the decompressed image and the result is fed as input to the image processing loss and used to optimize the network.

The exemplary training architecture is illustrated in Fig. 3. As can be seen in Fig. 3, the compression network does not only receive the compression loss as feedback but also an image processing loss. The latter is evaluated on the ground truth and the result obtained by the image processing software on the decompressed image.

The present disclosure is, however, not limited to one image processing software. The compression network can also be trained to yield suitable decompressed images for a group of different image processing software, e.g., a package with different algorithms for lung assessment with respect to cancer, pneumonia, pneumothorax, etc.

For the development of new AI image processing algorithms, the training of the compression network can also be combined with the training of the image processing network. In this case the ground truth is not generated by the image processing software itself but either manually or by a reference software. The image processing network is then trained in the usual fashion with the only difference that not the original image but its decompressed version is fed to the network.

A more universal compression network could be trained by using a (not yet fine-tuned) visual foundation model (Tenyks Blogger, 2023: https://medium.com/@tenyks_blogger/the-foundation-models-reshaping-computer-vision-b299a91527fb (Oct 26, 2023), trained via self-supervision, as the image processing network. A visual foundation model is a pre-trained deep neural network that is suitable for image segmentation. Such models build upon a base or 'foundation' that's already been built. Such models may be trained on big and diverse datasets to capture visual features that are universal to, for example, the medical domain. For example, such models may be used to perform segmentation tasks without a need to train a model from scratch. The predictions of this model for the original and decompressed image can be compared by a suitable loss function (e.g. mean-squared error). This loss function can then be added (used in addition to the compression loss) for letting the compression network learn to compress the image as much as possible while not deteriorating image details which the foundation model has learned to be relevant during self-supervised training. A resulting compression network is versatile for many concrete image processing tasks like segmentation.

As will be understood from the above, the method of the present disclosure suggests using the compression network that is trained based on a loss function that takes into account the task at hand. Specifically, this loss function is used, rather than adding additional information/features as an input channel. This allows a compression network with a very strong, lossy compression of the input image which however does not deteriorate the result of the image processing algorithm.

In an example, the compression network is jointly trained together with an image processing network. In this case, the image processing network becomes robust against image artifacts introduced by the compression network which yields an even higher acceptable compression of the input image.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

### LIST OF REFERENCE SIGNS:

- 100: System
- 110a, 110b, 110c: Processing devices
- 120: Data connection
- 130: Image compression network
- 130a: Encoding component
- 130b: Decoding component
- 140a, 140b: Image processing component
- 150: User interface
- 160: Data storage

### Method steps:

S10
S11
S12
S13
S14
S15
S15a
S16
S20

## Claims

1. A computer-implemented method for training an image compression network, the method comprising:
providing (S10) an image compression network comprising an encoding component and a decoding component;
providing (S11) an image processing component;
processing (S12) an initial image by the encoding component to obtain a compressed image;
processing (S13) the compressed image by the decoding component to obtain a decompressed image;
processing (S14) the decompressed image by the image processing component to obtain an image processing result for the decompressed image;
generating (S15) a loss function evaluating an image processing loss, the image processing loss based on a comparison between the image processing result for the decompressed image and an image processing ground truth result; and
using the loss function (S16) for training the image compression network.

2. The method according to claim 1, comprising (S15a) inputting the initial image into the image processing component and processing the initial image by means of the image processing method to obtain an image processing result for the initial image, wherein the image processing ground truth result is based on, in particular comprises, the image processing result for the initial image.

3. The method according to claim 1, wherein the image processing component is a machine learning-based component and the method comprises joint training of the image compression network and the image processing component.

4. The method according to claim 3, wherein the image processing component and the image compression network are trained on the same ground truth.

5. The method according to claim 4, wherein the ground truth is provided by a reference data source, such as from a reference image processing component and/or user input and/or a reference database.

6. The method according to any of the preceding claims, wherein the loss function is configured to score the quality of the image processing results of processing the decompressed image relative to the ground truth.

7. The method according to claim 6, wherein the image processing loss comprises at least one of a Dice loss, cross-entropy or focal loss for a segmentation algorithm, a cross-entropy or mean squared error loss for a classification task, cross-entropy or IoU (intersection over union) loss for an object detection task, mean squared error, mutual information or total variation loss for a registration task.

8. The method according to any of the preceding claims,
wherein the image processing component comprises a medical image processing component, optionally a ML-based component, and/or
wherein the image processing component comprises a visual foundation model, particularly a self-supervised trained visual foundation model, the visual foundation model being trained to identify relevant parts of an image, wherein the image processing loss is based on a determination whether the image processing result for the decompressed image maintains parts of the initial image identified as relevant by the visual foundation model.

9. The method according to claim 8, wherein the image processing component comprises the visual foundation model and wherein the loss function, particularly the image processing loss, is based on a mean-squared error and/or a cross-entropy loss and/or a contrastive loss function comparing the predictions of the visual foundation model given the initial image as input and given the decompressed image as input, respectively.

10. The method according to any of the preceding claims,
wherein the loss function is an image processing loss function, and
wherein the method comprises using a compression loss function together with the image processing loss function for training the image compression network, and/or
wherein the loss function evaluates, in addition to the image processing loss, a compression loss.

11. The method according to any of the preceding claims, wherein the image processing component is configured to carry out at least one of:
cropping an image, particularly a medical image, to a specific region of interest,
classification of an image or parts thereof, particularly a medical image or parts thereof,
segmentation of an image or parts thereof,
object detection,
registration of images.

12. A method of using (S20) the trained image compression network, obtained by means of the method according to any of the preceding claims, for compressing images, in particular prior to decompressing and processing an image by means of the image processing component or another image processing component, particularly prior to transmitting and subsequently decompressing and processing an image by means of the image processing component or another image processing component.

13. A system (100) comprising one or more processing devices (110a, 110b, 110c) configured to carry out the method according to any of claims 1 to 12.

14. A computer program product comprising instructions which, when the program is executed by a computing system, cause the computing system to carry out the method according to any of claims 1 to 12.

15. A computer readable medium having stored thereon instructions which, when executed by a computing system, cause the computing system to carry out the method according to any of claims 1 to 12.

16. An image compression network trained by any of the methods according to claim 1-11.
